# EUROPÄISCHE PATENTSCHRIFT

(11) **EP 1 332 296 B1**
(45) Veröffentlichungstag und Bekanntmachung des Hinweises auf die Patenterteilung: **06.10.2004**
(21) Anmeldenummer: 01993774.7
(22) Anmeldetag: 06.11.2001
(51) Int. Cl.: F16C 23/10, F16C 32/06

(54) **GASLAGERUNG EINER SCHNELLDREHENDEN WELLE MIT VERSTELLVORRICHTUNG ZUR EXZENTRISCHEN VERSETZUNG EINES GASLAGERS SOWIE VERFAHREN ZUM BETRIEB EINER DERARTIGEN GASLAGERUNG**
GAS BEARING FOR A RAPIDLY ROTATING SHAFT, COMPRISING AN ADJUSTING DEVICE FOR ECCENTRICALLY ADJUSTING A GAS BEARING AND A METHOD FOR OPERATING A GAS BEARING OF THIS TYPE
SYSTEME DE PALIERS DE GAZ POUR ARBRE A ROTATION RAPIDE COMPORTANT UN DISPOSITIF DE REGLAGE POUR LE DECALAGE EXCENTRIQUE D'UN PALIER DE GAZ, ET PROCEDE POUR FAIRE FONCTIONNER UN TEL SYSTEME DE PALIERS DE GAZ

(30) Priorität: 10.11.2000 DE 10055787
(43) Veröffentlichungstag der Anmeldung: 06.08.2003
(73) Patentinhaber: Wanger, Gerhard, 91722 Arberg (DE)
(72) Erfinder: Wanger, Gerhard, 91722 Arberg (DE)
(74) Vertreter: Lösch, Christoph
(86) Internationale Anmeldenummer: PCT/DE2001/004130
(87) Internationale Veröffentlichungsnummer: WO 2002/038974

(56) Entgegenhaltungen:
- US-A- 4 643 592
- US-A- 5 516 212
- US-A- 5 772 334
- US-A- 5 947 606
- PATENT ABSTRACTS OF JAPAN vol. 1997, no. 09, 30. September 1997 (1997-09-30) & JP 09 126228 A (MITSUBISHI HEAVY IND LTD), 13. Mai 1997 (1997-05-13)

## Beschreibung

Die Erfindung betrifft eine Gaslagerung einer schnelldrehenden Welle mit an einem Ende angeordnetem Werkzeug mit den Merkmalen des Oberbegriffs des Patentanspruchs 1. Ferner betrifft die Erfindung ein Verfahren zum Betrieb einer Gaslagerung einer schnelldrehenden Welle mit den Merkmalen des Oberbegriffs des Patentanspruchs 25.

Als Stand der Technik ist aus der DE 197 25 784 C2 eine Gaslagerung eines schnelldrehenden Werkzeugs bekannt, wobei zur radialen Lagerung einer Welle mindestens drei Gaslager vorhanden sind und die Lagerbohrung des ersten und des dritten Gaslagers konzentrisch zueinander angeordnet sind, während die Lagerbohrung des zweiten Gaslagers exzentrisch versetzt zu den Lagerbohrungen des ersten und des dritten Gaslagers angebracht ist.

In der DE 198 21 601 C1 (einem Zusatzpatent zur DE 197 25 784 C2) wird ferner eine Gaslagerung einer schnelldrehenden Welle beschrieben, bei welcher der Wert der radialen Steifigkeit des mittleren Gaslagers gegenüber dem Gehäuse möglichst klein gegenüber dem Wert der radialen Steifigkeit des ersten oder dritten Gaslagers gegenüber dem Gehäuse gewählt werden soll.

Der Erfindung liegt die Aufgabe zugrunde, eine Gaslagerung einer schnelldrehenden Welle mit an einem Ende angeordnetem Werkzeug anzubieten, welche individuell an bestimmte Betriebsbedingungen angepaßt werden kann. Ferner soll ein Verfahren zum Betrieb einer derartigen Gaslagerung angeboten werden.

Diese Aufgabe wird für die Gaslagerung durch die Merkmale des kennzeichnenden Teils des Patentanspruchs 1 in Verbindung mit den Merkmalen des Oberbegriffs gelöst. Vorteilhafte Ausführungsformen der Gaslagerung werden in den Unteransprüchen 2 - 24 beschrieben. Für das Verfahren wird die Aufgabe durch die Merkmale des kennzeichnenden Teils des Patentanspruchs 25 gelöst. Vorteilhafte Verfahrensvarianten werden in den Unteransprüchen 26 - 29 beschrieben.

Die erfindungsgemäße Gaslagerung besitzt eine Verstellvorrichtung zur exzentrischen Versetzung eines zweiten Gaslagers in Abhängigkeit von der Drehzahl der Welle. Wenn die Gaslagerung der schnelldrehenden Welle bei sehr hohen Drehzahlen von 120.000 Umdrehungen/min oder darüber betrieben wird, befindet sich die Enddrehzahl der Welle im überkritischen Schwingungsbereich. Damit muß beim Hochfahren der Welle zur Enddrehzahl die erste Eigenschwingung der Gaslagerung durchfahren werden, was bei den von der Anwenderseite geforderten immer höheren Enddrehzahlen zunehmend schwieriger wird, da an die Wuchtgüte der Welle immer höhere Anforderungen zu stellen sind.

Bei der erfindungsgemäßen Gaslagerung wird nun über die Verstellvorrichtung eine in Abhängigkeit von der Drehzahl der Welle beim Hochfahren und Herunterfahren veränderliche radiale Verspannkraft in das zweite Gaslager eingeleitet, wobei die radiale Verspannkraft der Verstellvorrichtung mit zunehmender Drehzahl beim Hochfahren ansteigt. Hierdurch wird die gelagerte Welle nicht erst beim Erreichen der Enddrehzahl, sondern während des gesamten Hochfahrbereichs hin zur Enddrehzahl im überkritischen Schwingungsbereich betrieben. Damit muß keine Eigenschwingung der Gaslagerung mehr durchlaufen werden und es können geringere Anforderungen an die Wuchtgüte der Welle gestellt werden.

Bei Veränderung der Verspannkraft der Verstellvorrichtung in Abhängigkeit von der Drehzahl der Welle verändert sich auch der radiale Lagerspalt des zweiten Gaslagers gegenüber der Welle und damit auch die Spalthöhe des zweiten Gaslagers gegenüber dem Gehäuse.

Um eine erhöhte Stabilität beim Hochfahren der Welle zu erreichen, hat sich herausgestellt, daß das radiale Spiel des zweiten Gaslagers gegenüber dem Gehäuse mindestens so groß wie das radiale Lagerspiel des zweiten Gaslagers gegenüber der aufgenommenen Welle sein sollte.

Gemäß einer weiteren vorteilhaften Ausführungsform der Gaslagerung wird vom zweiten Gaslager über das erste oder dritte Gaslager Reibungswärme an das luft- oder wassergekühlte Gehäuse abgeführt.

Um eine ausreichende Verstellbarkeit des zweiten Gaslagers über alle Betriebszustände zu erreichen, sollte dessen axiales Spiel um mindestens den Faktor 1,15 größer sein als das Produkt aus dessen Längenausdehnungskoeffizient α, der Lagerbreite B und dem Temperaturunterschied Δt zwischen zweitem Gaslager und Gehäuse bei Betriebsdrehzahl.

Die erfindungsgemäße Verstellvorrichtung kann je nach Anforderungsprofil die erforderliche radiale Verspannkraft elektrisch, elektromagnetisch, hydraulisch oder pneumatisch erzeugen.

Zur Regelung der radialen Verspannkraft des zweiten Gaslagers in Abhängigkeit von der Drehzahl der Welle ist vorteilhafterweise ein Drehzahlsensor zur Erfassung der Wellendrehzahl vorgesehen. Dieser Drehzahlsensor kann z.B. als Hallsensor oder als optischer Sensor ausgebildet sein.

Bei einer elektromagnetischen ausgebildeten Verstellvorrichtung kann ein Hubmagnet oder eine bürstenlose Drehspule zur Erzeugung der radialen Verspannkraft der Verstellvorrichtung vorgesehen sein, wodurch handelsübliche Bauteile verwendet werden können.

Falls erforderlich, kann zur Kraftverstärkung und Kraftdosierung zwischen dem zweiten Gaslager und der Verstellvorrichtung eine Kraftverstärkung, z.B. in Form eines Hebels und/oder ein Zahnradübersetzung, vorgesehen sein. Damit kann die in das zweite Gaslager eingeleitete radiale Verspannkraft exakt dosiert werden.

Eine verbesserte Stabilität der Wellenlagerung beim Hochfahren der Drehzahl wird ferner erreicht, wenn das Verhältnis der radialen Verspannkraft F_{V} der Verstellvorrichtung zur radialen Steifigkeit c des zweiten Gaslagers bei Einsetzen des Halbfrequenzwirbels höchstens um den Faktor 3,3 größer ist als bei der Betriebsdrehzahl der Gaslagerung.

Der Vektor der radialen Reibkraft F_{R} zwischen den Planflächen des ersten oder dritten Gaslagers und des zweiten, mittleren Gaslagers ist der Bewegungsrichtung des zweiten Gaslagers bei Veränderung von dessen radialer Verspannkraft entgegengesetzt. Folglich wirkt beim Hochfahren der Welle auf die Enddrehzahl die radiale Reibkraft der radialen Verspannkraft der Verstellvorrichtung entgegen, während beim Herunterfahren der Welle die Reibkraft in die gleiche Richtung wie die Verspannkraft wirkt, wodurch das zweite Gaslager beim Herunterfahren der Welle zusätzlich belastet wird. Um eine Überlastung des zweiten Gaslagers zu vermeiden, sollte die radiale Reibkraft des zweiten Gaslagers höchstens 65% der maximalen radialen Verspannkraft F_{Vmax} der Verstellvorrichtung bei Betriebsdrehzahl betragen.

Eine vorteilhafte Stabilisierung der Welle bereits in der Anfangsphase beim Hochfahren auf die Enddrehzahl wird erreicht, wenn die Verstellvorrichtung im Ruhezustand der Gaslagerung eine Mindestexzentrizität von 10% des radialen Lagerspalts des zweiten Gaslagers gegenüber der Welle besitzt. Bei einer Verstellvorrichtung, welche die radiale Verspannkraft elektrisch oder elektromagnetisch erzeugt, kann eine Regelung durch ein elektrisches Signal (z.B. eine Spannung) in Abhängigkeit von der Drehzahl erfolgen. Da die schnelldrehende Welle meist elektrisch angetrieben wird, können bereits vorhandene Komponenten zur Feststellung der Drehzahl (z.B. ein Hallsensor) zusätzlich zur Drehzahlerfassung zur Bestimmung der radialen Verspannkraft genutzt werden.

Bei einer Verstellvorrichtung, welche die radiale Spannkraft hydraulisch oder pneumatisch erzeugt, ist zusätzlich ein elektrisch betätigtes Regelventil zu verwenden, welche das elektrische Signal des Drehzahlsensor in ein Drucksignal wandelt.

Eine weitere besonders vorteilhafte Ausführungsform der Verstellvorrichtung ergibt sich, wenn die radiale Verspannkraft pneumatisch erzeugt wird und eine Druckkammer zur Erzeugung der radialen Verspannkraft vorgesehen ist, die über eine Bohrung mit einem Lagerspalt der Welle verbunden ist. Diese Bohrung dient als Druckausgleichsbohrung, wodurch der in einem radialen oder axialen Lagerspalt der Welle aufgebaute Druck an die Druckkammer des zweiten Gaslagers weitergeleitet wird, wodurch sich am zweiten Gaslager die gewünschte radiale Verspannkraft mit ihrem zeitlichen Verlauf in Abhängigkeit von der Drehzahl auf- bzw. abbaut. Damit sind keine zusätzlichen Aggregate z.B. zur elektrischen oder elektromagnetischen Erzeugung der radialen Verspannkraft erforderlich, letztere bildet sich beim Hochfahren der Welle auf Betriebsdrehzahl selbsttätig heraus.

Die Druckkammer kann im Gehäuse der Gaslagerung angebracht sein und wird in einer besonders vorteilhaften Ausführungsform zwischen dem zweiten Gaslager und dem Gehäuse angeordnet, wobei keine weiteren Bauteile benötigt werden. Die Druckausgleichsbohrung und die Druckkammer sollen ein möglichst kleines Volumen einnehmen, da die Förderleistung der Gaslagerung gering ist, so daß bei einem erwünschten schnellen Druckaufbau beim Hochfahren der Welle auf Enddrehzahl die Druckkammer zwischen zweitem Gaslager und Gehäuse eine möglichst geringe Spalthöhe aufweisen sollte.

Vorteilhafterweise beträgt die Spalthöhe der Druckkammer im Betriebszustand jedoch mindestens 70% vom radialen Spiel des zweiten Gaslagers. Die Breite der Druckkammer soll mindestens 40% der Lagerbreite des zweiten Gaslagers betragen, um die erforderlichen radialen Verspannkräfte aufzubringen.

Um einen zuverlässigen Druckaufbau in der Druckkammer zu erreichen, soll eine Abdichtung vorgesehen sein, welche vorteilhafterweise über Dichtringe gebildet wird. Diese Dichtringe können aus Silikon bestehen, um die radiale Steifigkeit des zweiten Gaslagers möglichst gering zu erhöhen.

Bei der beschriebenen ausgebildeten Verstellvorrichtung zur selbstregelnden pneumatischen Erzeugung der radialen Verspannkraft ist im Gegensatz zu Verstellvorrichtungen nach den geschilderten anderen Prinzipien zur Erzeugung der radialen Verspannkraft keine elektrische Steuerung/Regelung notwendig. Vielmehr erfolgt eine selbstregelnde pneumatische Erzeugung der radialen Verspannkraft, welche bei entsprechender Auswahl des Druckpunkts, an dem die Ausgleichsbohrung in die Druckkammer mündet, den gewünschten zunehmenden Verlauf der radialen Verspannkraft beim Hochfahren auf die Enddrehzahl ergibt.

Bei einem zylindrisch ausgebildeten zweiten Gaslager ist die Druckkammer vorteilhafterweise an einem Teilbereich der äußeren Oberfläche des zweiten Gaslagers angebracht, wobei der Umfangswinkel β der Druckkammer zur Erzeugung der radialen Verspannkraft maximal etwa 210 Winkelgrad beträgt. Eine besonders vorteilhafte und gezielte Wirkung der radialen Verspannkraft tritt ein, wenn der Umfangswinkel β der Druckkammer etwa 120 Winkelgrad beträgt.

Beim erfindungsgemäßen Verfahren zum Betrieb einer Gaslagerung einer schnelldrehenden Welle mit an einem Ende angeordnetem Werkzeug wird über eine Verstellvorrichtung eine zunehmende exzentrische Versetzung des zweiten Gaslagers bei zunehmender Drehzahl der Welle vorgenommen. Gemäß einer vorteilhaften Verfahrensvariante steigt dabei die exzentrische Versetzung und damit die radiale Verspannkraft der Verstellvorrichtung mit zunehmender Drehzahl der Welle mindestens linear und insbesondere progressiv an. Die radiale Verspannkraft der Verstellvorrichtung kann dabei elektrisch, elektromagnetisch, hydraulisch oder pneumatisch erzeugt werden.

Eine besonders vorteilhafte Verfahrensvariante wird dadurch realisiert, wenn die Verstellvorrichtung selbsttätig pneumatisch betätigt wird, wobei keine externe Gaszuführung erfolgt, sondern ein Druckaufbau zur Erzeugung der radialen Verspannkraft über eine Bohrung zwischen einem Lagerspalt der Welle und einer Druckkammer erfolgt.

Vorteilhafterweise steigt dabei der Druck im radialen oder axialen Lagerspalt an der Öffnung der Bohrung an und fällt mit abnehmender Drehzahl ab, wodurch sich der gewünschte ansteigende bzw. abfallende Verlauf der radialen Verspannkraft beim Hochfahren bzw. Herunterfahren der Welle einstellt,

Die Erfindung ist anhand von Ausführungsbeispielen in den Zeichnungsfiguren näher erläutert. Es zeigen:
- Fig. 1: ein Längsschnitt C-D nach Fig. 2 durch ein im wesentlichen zylindrisch ausgebildetes Gehäuses einer ersten Ausführungsform einer Gaslagerung,
- Fig. 2: ein Schnitt A-B nach Fig. 1,
- Fig. 3: ein Schnitt E-F nach Fig. 4 durch ein im wesentlichen zylindrisches Gehäuse einer zweiten Ausführungsform einer Gaslagerung,
- Fig. 4: ein Schnitt G-H nach Fig. 3 sowie
- Fig. 5: ein Längsschnitt durch ein im wesentlichen zylindrisches Gehäuse einer weiteren Ausführungsform einer Gaslagerung.

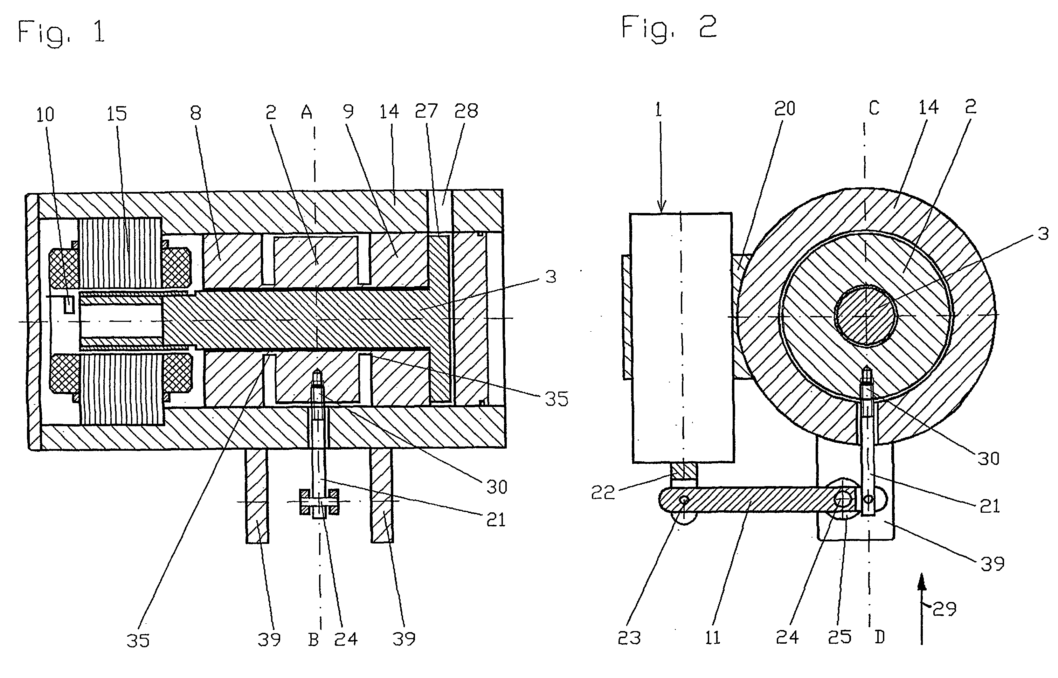

Fig. 1 zeigt eine erste Ausführungsform einer Gaslagerung einer schnelldrehenden Welle 3 in einem im wesentlichen zylindrisch ausgebildeten Gehäuse 14. Die Welle 3 wird durch einen Motor 15, z.B. einen Gleichstrommotor oder einen Drehstrom-Asynchronmotor, angetrieben, wobei die Gaslagerung aus einem zweiten, mittleren Gaslager 2 und aus einem ersten Gaslager 9 und einem dritten Gaslager 8 besteht, die über Stege 35 verbunden sein können.

Am dem Motor 15 abgewandten Ende der Welle 3 kann sich ein Polygonspiegel 27 befinden, der über eine Öffnung 28 im Gehäuse 14 mit Lichtstrahlen, z.B. Laserstrahlen, beleuchtet werden kann, wobei die reflektierten Laserstrahlen zum Aufbau eines digitalen Bildes nach der Laser-Display-Technologie (LDT) verwendet werden können. Hierbei wird die Welle 3 mit einer Betriebsdrehzahl von 120.000 Umdrehungen/min oder höher betrieben. Der geschilderte Anwendungsfall für die LDT-Anwendung ist nur einer von vielen möglichen. Am Ende der Welle 3 kann auch ein beliebiges anderes Werkzeug angebracht sein.

Bei der Gaslagerung nach Fig. 1 ist nun eine z.B. elektromagnetisch arbeitende Verstellvorrichtung 1 an einer Halterung 20 des Gehäuses 14 nach Fig. 2 vorgesehen, welche über einen Anker 22, ein Gelenk 23, den Hebel 11, das weitere Gelenk 24 am Lager 25 am Halter 39 über die Zug-/Druckstange 21 mit dem zweiten, mittleren Gaslager 2 verbunden ist. Bei Betätigung der Verstellvorrichtung 1 wird auf das zweite Gaslager 2 in Kraftrichtung 29 über die Zug-/Druckstange 21 eine radiale Verspannkraft F_{V} eingeleitet. Die Verstellvorrichtung 1 dient damit zur zunehmenden exzentrischen Versetzung des zweiten Gaslagers 2 gegenüber dem ersten Gaslager 9 und dem dritten Gaslager 8 bei zunehmender Drehzahl der Welle 3, die z.B. über einen Drehzahlsensor 10, z.B. einen Hallsensor, festgestellt wird. Der Drehzahlsensor 10 ist über eine nicht abgebildete Steuer-/Regeleinrichtung mit der Ansteuerung der Verstellvorrichtung 1 verbunden, so daß letztere bei zunehmender Drehzahl der Welle 3 beim Hochfahren der Welle 3 auf Betriebsdrehzahl eine zunehmende radiale Verspannkraft F_{V} auf das zweite Gaslager 2 ausüben kann. Die Zug-/Druckstange 21 ist dabei über die Schraube 30 mit dem zweiten Gaslager 2 verbunden.

Bei einer Ausführungsform der erfindungsgemäßen Gaslagerung gemäß den Fig. 1 und 2 ist eine externe Verstellvorrichtung 1 vorgesehen, die eine radiale Verspannkraft F_{V} in das zweite Gaslager 2 zu dessen exzentrischer Versetzung gegenüber dem ersten Gaslager 9 und dem dritten Gaslager 8 in Abhängigkeit von der Drehzahl der Welle 3 einleitet.

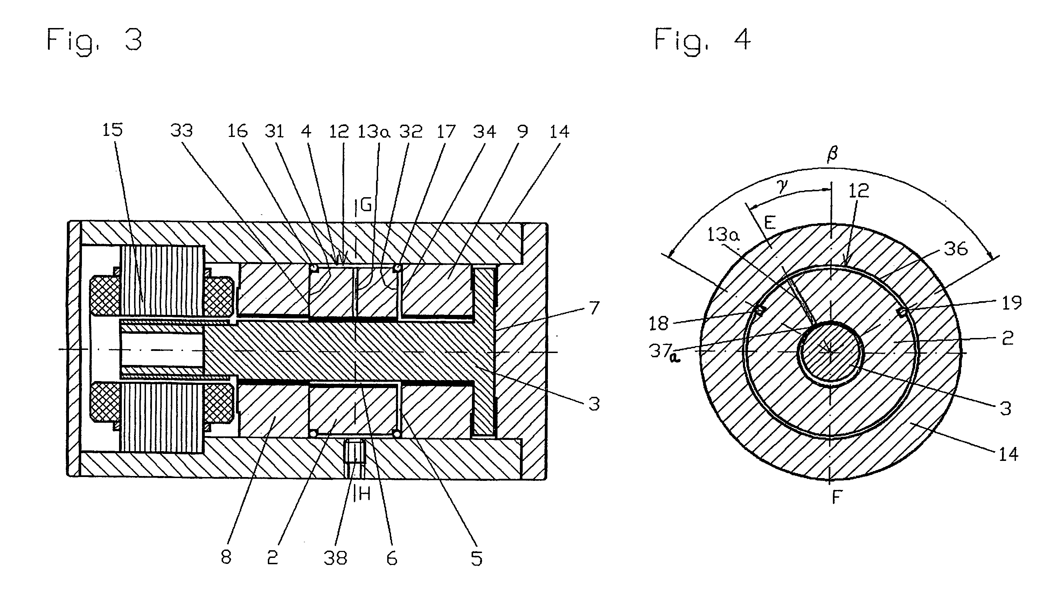

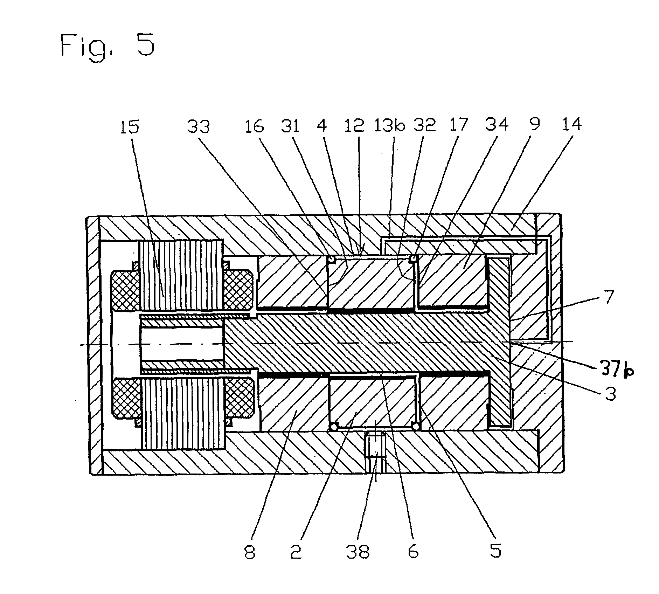

Aus den Fig. 3 - 5 gehen besonders vorteilhafte Ausführungsformen der erfindungsgemäßen Gaslagerung hervor, wobei keine separate Verstellvorrichtung 1 vorgesehen ist, sondern die radiale Verspannkraft F_{V} zur exzentrischen Versetzung des zweiten Gaslagers 2 beim Hoch- und Herunterfahren der Welle 3 pneumatisch durch einen in einem radialen Lagerspalt 6 oder einem axialen Lagerspalt 7 aufgebauten Druck erzeugt wird, welcher über eine Bohrung 13a oder 13b mit einer Druckkammer 12 dem zweiten Gaslager 2 zur Aufbringung der radialen Verspannkraft F_{V} zugeführt wird.

Das zweite Gaslager 2 besitzt Planflächen 31, 32, welche Planflächen 33, 34 des dritten Gaslagers 8 und des ersten Gaslagers 9 zur Wärmeabführung aus dem zweiten Gaslager 2 kontaktieren können. Der Abstand zwischen den Planflächen 31, 32 entspricht der Breite B des zweiten Gaslagers 2. In den Ausführungsformen der Gaslagerung gemäß den Fig. 3, 5 kann eine Fixierschraube 38 vorgesehen sein, die jedoch nur zur Fixierung des zweiten Gaslagers 2 bei der Herstellung durch Bohren dient und keinerlei Anwendung in Zusammenhang mit der exzentrischen Versetzung des zweiten Gaslagers 2 besitzt.

Das zweite Gaslager 2 hat ein radiales Spiel 4 gegenüber dem Gehäuse 14 sowie ein axiales Spiel 5, hier gegenüber dem ersten Gaslager 9.

Die Gaslagerung gemäß Fig. 3 besitzt eine Bohrung 13a, die ausgehend von einem radialen Lagerspalt 6 zwischen zweitem Gaslager 2 und Welle 3 eine Verbindung zur Druckkammer 12 zwischen zweiten Gaslager 2 und Gehäuse 5 herstellt. Beim Hochfahren der Welle 3 wird nun der im radialen Lagerspalt 6 aufgebaute Druck über die Bohrung 13a an die Druckkammer 12 weitergeleitet, wobei sich dort die gewünschte zunehmende radiale Verspannkraft F_{V} zur exzentrischen Versetzung des zweiten Gaslagers 2 gegenüber dem ersten Gaslager 9 und dem dritten Gaslager 8 aufbaut.

Aus der Schnittansicht G-H gemäß Fig. 4 geht der Neigungswinkel γ hervor, welcher die Lage der Bohrung 13a gegenüber der Senkrechten anzeigt. Die Druckkammer 12 besitzt die Spalthöhe 36 und einen Umfangswinkel β und ist in axialer Richtung der Gaslagerung durch die Dichtungen 16, 17 und in tangentialer Richtung des zweiten Gaslagers 2 durch die Dichtungen 18, 19 gegenüber dem Gehäuse 14 abgedichtet. Die Dichtungen 16, 17, 18, 19 bilden dabei ein gewölbtes Viereck. Die Bohrung 13a mit Druckpunkt 37a mündet in die Druckkammer 12.

In der Ausführungsform der Gaslagerung nach Fig. 5 ist statt der radialen Bohrung 13a eine axiale Bohrung 13b mit Druckpunkt 37b vorgesehen, welche eine Verbindung zwischen der Druckkammer 12 und dem axialen Lagerspalt 7 der Welle 3 herstellt.

Sowohl bei den Ausführungsformen mit radialer Bohrung 13a (vgl. Fig. 3, 4) als auch bei der Ausführungsform mit axialer Bohrung 13b wird keine separate Verstellvorrichtung 1 benötigt. Der benötigte Druck zur Aufbringung der radialen Verspannkraft, welcher auf das zweite Gaslager 2 wie die Verstellvorrichtung 1 gemäß den Fig. 1, 2 wirkt, wird ohne separate Gaszuführung durch in den Lagerspalten 6, 7 aufgebauten Druck intern erzeugt. Eine derartige Gaslagerung mit integrierter pneumatischer Verstellung und Aufbringung radialer Verspannkraft F_{V} ist somit besonders zuverlässig und benötigt eine geringe Anzahl von Bauteilen.

### BEZUGSZEICHEN

- 1: Verstellvorrichtung
- 2: zweites Gaslager
- 3: Welle
- 4: radiales Spiel
- 5: axiales Spiel
- 6: radialer Lagerspalt
- 7: axialer Lagerspalt
- 8: drittes Gaslager
- 9: erstes Gaslager
- 10: Drehzahlsensor
- 11: Hebel
- 12: Druckkammer
- 13a,13b: Bohrung
- 14: Gehäuse
- 15: Motor
- 16,17,18,19: Dichtung
- 20: Halterung
- 21: Zug-/Druckstange
- 22: Anker
- 23,24: Gelenk
- 25: Lager
- 27: Polygonspiegel
- 28: Öffnung
- 29: Kraftrichtung
- 30: Schraube
- 31,32,33,34: Planfläche
- 35: Steg
- 36: Spalthöhe
- 37a, 37b: Druckpunkt
- 38: Fixierschraube
- 39: Halter

- F_{V}: radiale Verspannkraft
- F_{R}: radiale Reibkraft
- c: radiale Steifigkeit

- α: Lagerausdehnungskoeffizient
- β: Umfangswinkel
- γ: Neigungswinkel
- Δt: Temperaturunterschied

## Patentansprüche

1. Gaslagerung einer schnelldrehenden Welle (3) mit an einem Ende angeordnetem Werkzeug, insbesondere Gaslagerung einer schnelldrehenden Welle (3) mit an einem Ende angeordnetem Polygonspiegel (27) für eine optische Spindel, wobei zur radialen Lagerung entlang der Welle in einem Gehäuse (14) angeordnete Gaslager (2, 8, 9) vorhanden sind und wobei ein erstes Gaslager (9) und ein drittes Gaslager (8) konzentrisch zueinander und ein zweites Gaslager (2), das sich in der Mitte zwischen dem ersten Gaslager (9) und dem dritten Gaslager (2) befindet, exzentrisch versetzt zum ersten und dritten Gaslager angebracht ist,
**dadurch gekennzeichnet, daß** eine Verstellvorrichtung (1) zur zunehmenden exzentrischen Versetzung des zweiten Gaslagers (2) bei zunehmender Drehzahl der Welle (3) vorgesehen ist.

2. Gaslagerung nach Anspruch 1,
**dadurch gekennzeichnet, daß** das radiale Spiel (4) des zweiten Gaslagers (2) gegenüber dem Gehäuse (14) mindestens so groß ist wie der radiale Lagerspalt des Gaslagers (2) gegenüber der aufgenommenen Welle (3).

3. Gaslagerung nach Anspruch 1 oder 2,
**dadurch gekennzeichnet, daß** das zweite Gaslager (2) ein axiales Spiel (7) besitzt.

4. Gaslagerung nach einem der Ansprüche 1 - 3,
**dadurch gekennzeichnet, daß** eine der beiden Planflächen (31, 32) des zweiten Gaslagers (2) eine Planfläche (33, 34) des ersten Gaslagers (9) oder des dritten Gaslagers (8) kontaktiert.

5. Gaslagerung nach einem der Ansprüche 1 - 4,
**dadurch gekennzeichnet, daß** die Verstellvorrichtung (1) zur elektrischen, elektromagnetischen, hydraulischen oder pneumatischen Erzeugung einer radialen Verspannkraft F_{V} ausgebildet ist.

6. Gaslagerung nach einem der Ansprüche 1 - 5,
**dadurch gekennzeichnet, daß** mindestens ein Drehzahlsensor (10) vorgesehen ist.

7. Gaslagerung nach Anspruch 6,
**dadurch gekennzeichnet, daß** der Drehzahlsensor (10) als Hallsensor oder als optischer Sensor ausgebildet ist.

8. Gaslagerung nach einem der Ansprüche 1 - 7,
**dadurch gekennzeichnet, daß** ein Hubmagnet oder eine bürstenlose Drehspule zur Erzeugung der radialen Verspannkraft der Verstellvorrichtung (1) vorgesehen ist.

9. Gaslagerung nach einem der Ansprüche 1 - 8,
**dadurch gekennzeichnet, daß** zwischen dem zweiten Gaslager (2) und der Verstellvorrichtung (1) eine Kraftverstärkung angebracht ist.

10. Gaslagerung nach Anspruch 9,
**dadurch gekennzeichnet, daß** die Kraftverstärkung einen Hebel (11) oder eine Zahnradübersetzung aufweist.

11. Gaslagerung nach einem der Ansprüche 1 - 10,
**dadurch gekennzeichnet, daß** das Verhältnis der radialen Verspannkraft F_{V} der Verstellvorrichtung (1) zur radialen Steifigkeit c des zweiten Gaslagers (2) bei Einsetzen des Halbfrequenzwirbels höchstens um den Faktor 3,3 größer ist als bei der Betriebsdrehzahl der Gaslagerung.

12. Gaslagerung nach einem der Ansprüche 1 - 11,
**dadurch gekennzeichnet, daß** das axiale Spiel (5) des zweiten Gaslagers (2) um mindestens den Faktor 1,15 größer ist als das Produkt aus dessen Längenausdehnungskoeffizient α, Lagerbreite B und Temperaturunterschied Δt zwischen zweitem Gaslager (2) und Gehäuse (5) bei Betriebsdrehzahl.

13. Gaslagerung nach einem der Ansprüche 1 - 12,
**dadurch gekennzeichnet, daß** die radiale Reibkraft F_{R} des zweiten Gaslagers (2) höchstens 65 Prozent der maximalen radialen Verspannkraft F_{Vmax} der Verstellvorrichtung (1) bei Betriebsdrehzahl beträgt.

14. Gaslagerung nach einem der Ansprüche 1 - 13,
**dadurch gekennzeichnet, daß** die exzentrische Versetzung des zweiten Gaslagers (2) im Ruhezustand der Gaslagerung eine Mindestexzentrizität von 10 Prozent des radialen Lagerspaltes (6) des zweiten Gaslagers (2) besitzt.

15. Gaslagerung nach einem der Ansprüche 1 - 14,
**dadurch gekennzeichnet, daß** die Verstellvorrichtung (1) zur pneumatischen Erzeugung einer radialen Verspannkraft F_{V} ausgebildet ist, wobei eine Druckkammer (12) zur Erzeugung der radialen Verspannkraft F_{V} vorgesehen ist, die über eine Bohrung (13) mit einem Lagerspalt (6, 7) verbunden ist.

16. Gaslagerung nach Anspruch 15,
**dadurch gekennzeichnet, daß** die Druckkammer (12) zwischen dem zweiten Gaslager (2) und dem Gehäuse (5) angeordnet ist.

17. Gaslagerung nach Anspruch 15 oder 16,
**dadurch gekennzeichnet, daß** die Druckkammer (12) eine Abdichtung gegen Druckverlust aufweist.

18. Gaslagerung nach Anspruch 17,
**dadurch gekennzeichnet, daß** die Abdichtung mindestens eine Dichtung (16, 17) aufweist.

19. Gaslagerung nach Anspruch 18,
**dadurch gekennzeichnet, daß** die Dichtung (16,17) aus Silikon besteht.

20. Gaslagerung nach einem der Ansprüche 15 - 19,
**dadurch gekennzeichnet, daß** der Umfangswinkel β der Druckkammer (12) etwa 120 Winkelgrad beträgt.

21. Gaslagerung nach einem der Ansprüche 15 - 20,
**dadurch gekennzeichnet, daß** der Winkel β der Druckkammer (12) maximal etwa 210 Winkelgrad beträgt.

22. Gaslagerung nach einem der Ansprüche 15 - 21,
**dadurch gekennzeichnet, daß** die Spalthöhe (18) der Druckkammer (12) im Betriebszustand mindestens 70 Prozent vom radialen Spiel (4) des zweiten Gaslagers (2) beträgt.

23. Gaslagerung nach der Ansprüche 15 - 22,
**dadurch gekennzeichnet, daß** der Durchmesser der Druckkammer (12) um mindestens den Faktor 1,7 größer ist als der Durchmesser des zweiten Gaslagers (2).

24. Gaslagerung nach Ansprüche 15 - 23,
**dadurch gekennzeichnet, daß** die Breite der Druckkammer (12) mindestens 40 Prozent der Lagerbreite des zweiten Gaslagers (2) beträgt.

25. Verfahren zum Betrieb einer Gaslagerung einer schnelldrehenden Welle mit an einem Ende angeordnetem Werkzeug, insbesondere Verfahren zur Gaslagerung einer schnelldrehenden Welle mit an einem Ende angeordnetem Polygonspiegel für eine optische Spindel, wobei zur radialen Lagerung entlang der Welle drei in einem Gehäuse angeordnete Gaslager vorhanden sind und wobei ein erstes und ein drittes Gaslager konzentrisch zueinander und ein zweites Gaslager, das sich in der Mitte zwischen dem ersten und dritten Gaslager befindet, exzentrisch versetzt zum ersten und dritten Gaslager angebracht ist, insbesondere Verfahren zum Betrieb einer Gaslagerung einer schnelldrehenden Welle nach einem der Ansprüche 1 - 24,
**dadurch gekennzeichnet, daß** über eine Verstellvorrichtung eine zunehmende exzentrische Versetzung des zweiten Gaslagers mit zunehmender Drehzahl der Welle erfolgt.

26. Verfahren zum Betrieb einer Gaslagerung nach Anspruch 25,
**dadurch gekennzeichnet, daß** die radiale Verspannkraft der Verstellvorrichtung mit zunehmender Drehzahl der Welle mindestens linear ansteigt.

27. Verfahren zum Betrieb einer Gaslagerung nach Anspruch 25 oder 26,
**dadurch gekennzeichnet, daß** radiale Verspannkraft der Verstellvorrichtung elektrisch, elektromagnetisch, hydraulisch oder pneumatisch erzeugt wird.

28. Verfahren zum Betrieb einer Gaslagerung nach einem der Ansprüche 25 - 27,
**dadurch gekennzeichnet, daß** die Verstellvorrichtung pneumatisch betätigt wird, wobei über eine Bohrung eine Druckeinspeisung einer auf das zweite Gaslager wirkenden Druckkammer der Verstellvorrichtung von einem radialen oder axialen Lagerspalt erfolgt.

29. Verfahren zum Betrieb einer Gaslagerung nach Anspruch 28,
**dadurch gekennzeichnet, daß** der Druck im radialen oder axialen Lagerspalt an der Öffnung zur Bohrung mit zunehmender Drehzahl der Welle ansteigt und mit abnehmender Drehzahl abfällt.

## Claims

1. A gas mounting of a rapidly rotating shaft (3) with a tool arranged at one end, in particular a gas mounting of a rapidly rotating shaft (3) with a polygonal mirror (27) arranged at one end for an optical spindle, gas bearings (2, 8, 9) arranged in a housing (14) being present for radial mounting along the shaft, and a first gas bearing (9) and a third gas bearing (8) being mounted concentrically to one another and a second gas bearing (2), which is located in the middle between the first gas bearing (9) and the third gas bearing (2), being mounted so as to be eccentrically offset to the first and the third gas bearing, **characterized in that** an adjusting device (1) for the increasing eccentric offset of the second gas bearing (2) at an increasing rotational speed of the shaft (3) is provided.

2. The gas mounting as claimed in claim 1, **characterized in that** the radial play (4) of the second gas bearing (2) with respect to the housing (14) is at least as great as the radial bearing gap of the gas bearing (2) with respect to the received shaft (3).

3. The gas mounting as claimed in claim 1 or 2, **characterized in that** the second gas bearing (2) possesses an axial play (7).

4. The gas mounting as claimed in one of claims 1-3, **characterized in that** one of the two plane surfaces (31, 32) of the second gas bearing (2) contacts a plane surface (33, 34) of the first gas bearing (9) or the third gas bearing (8).

5. The gas mounting as claimed in one of claims 1-4, **characterized in that** the adjusting device (1) is designed for the electrical, electromagnetic, hydraulic or pneumatic generation of a radial bracing force F_{V}.

6. The gas mounting as claimed in one of claims 1-5, **characterized in that** at least one rotational speed sensor (10) is provided.

7. The gas mounting as claimed in claim 6, **characterized in that** the rotational speed sensor (10) is designed as a Hall sensor or as an optical sensor.

8. The gas mounting as claimed in one of claims 1-7, **characterized in that** a lifting magnet or a brushless moving coil is provided for generating the radial bracing force of the adjusting device (1).

9. The gas mounting as claimed in one of claims 1-8, **characterized in that** force amplification is provided between the second gas bearing (2) and the adjusting device (1).

10. The gas mounting as claimed in claim 9, **characterized in that** the force amplification has a lever (11) or a gearwheel step-up.

11. The gas mounting as claimed in one of claims 1-10, **characterized in that** the ratio of the radial bracing force F_{V} of the adjusting device (1) to the radial rigidity c of the second gas bearing (2) at the commencement of the half-frequency vortex is at most greater by the factor 3.3 than at the operating rotational speed of the gas mounting.

12. The gas mounting as claimed in one of claims 1-11, **characterized in that** the axial play (5) of the second gas bearing (2) is greater by at least the factor 1.15 than the product of its longitudinal expansion coefficient α, the bearing width B and the temperature difference Δt between the second gas bearing (2) and the housing (5) at the operating rotational speed.

13. The gas mounting as claimed in one of claims 1-12, **characterized in that** the radial frictional force F_{R} of the second gas bearing (2) amounts to at most 65% of the maximum radial bracing force F_{Vmax} of the adjusting device (1) at the operating rotational speed.

14. The gas mounting as claimed in one of claims 1-13, **characterized in that** the eccentric offset of the second gas bearing (2) possesses, in the state of rest of the gas mounting, a minimum eccentricity of 10% of the radial bearing gap (6) of the second gas bearing (2).

15. The gas mounting as claimed in one of claims 1-14, **characterized in that** the adjusting device (1) is designed for the pneumatic generation of a radial bracing force F_{V}, a pressure chamber (12), which is connected to a bearing gap (6, 7) via a bore (13), being provided for generating the radial bracing force F_{V}.

16. The gas mounting as claimed in claim 15, **characterized in that** the pressure chamber (12) is arranged between the second gas bearing (2) and the housing (5).

17. The gas mounting as claimed in claim 15 or 16, **characterized in that** the pressure chamber (12) has sealing against pressure loss.

18. The gas mounting as claimed in claim 17, **characterized in that** the sealing has at least one seal (16, 17).

19. The gas mounting as claimed in claim 18, **characterized in that** the seal (16, 17) consists of silicone.

20. The gas mounting as claimed in one of claims 15-19, **characterized in that** the circumferential angle β of the pressure chamber (12) amounts to about 120 degrees of angle.

21. The gas mounting as claimed in one of claims 15-20, **characterized in that** the angle β of the pressure chamber (12) amounts to at most about 210 degrees of angle.

22. The gas mounting as claimed in one of claims 15-21, **characterized in that**, in the operating state, the gap height (18) of the pressure chamber (12) amounts to at least 70 percent of the radial play (4) of the second gas bearing (2).

23. The gas mounting as claimed in claims 15-22, **characterized in that** the diameter of the pressure chamber (12) is greater by at least the factor 1.7 than the diameter of the second gas bearing (2).

24. The gas mounting as claimed in claims 15-23, **characterized in that** the width of the pressure chamber (12) amounts to at least 40 percent of the bearing width of the second gas bearing (2).

25. A method for operating a gas mounting of a rapidly rotating shaft with a tool arranged at one end, in particular a method for the gas mounting of a rapidly rotating shaft with a polygonal mirror arranged at one end for an optical spindle, three gas bearings arranged in a housing being present for radial mounting along the shaft, and a first and a third gas bearing being mounted concentrically to one another and a second gas bearing, which is located in the middle between the first and the third gas bearing, being mounted so as to be eccentrically offset to the first and the third gas bearing, in particular a method for operating a gas mounting of a rapidly rotating shaft as claimed in one of claims 1-24, **characterized in that** an increasing eccentric offset of the second gas bearing with an increasing rotational speed of the shaft takes place via an adjusting device.

26. The method for operating a gas mounting as claimed in claim 25, **characterized in that** the radial bracing force of the adjusting device rises at least linearly with an increasing rotational speed of the shaft.

27. The method for operating a gas mounting as claimed in claim 25 or 26, **characterized in that** the radial bracing force of the adjusting device is generated electrically, electromagnetically, hydraulically or pneumatically.

28. The method for operating a gas mounting as claimed in one of claims 25-27, **characterized in that** the adjusting device is actuated pneumatically, a pressure feed of a pressure chamber, acting on the second gas bearing, of the adjusting device from a radial or axial bearing gap taking place via a bore.

29. The method for operating a gas mounting as claimed in claim 28, **characterized in that** the pressure in the radial or axial bearing gap at the orifice to the bore rises with an increasing rotational speed of the shaft and falls with a decreasing rotational speed.

## Revendications

1. Système de palier à gaz pour arbre (3) à rotation rapide à une extrémité duquel est agencé un outil, en particulier système de palier à gaz pour arbre (3) à rotation rapide, à une extrémité duquel est agencé un miroir polygonal (27) pour une broche optique, des paliers à gaz (2, 8, 9) disposés dans un boîtier (14) étant prévus le long de l'arbre en vue de son montage radial, un premier palier à gaz (9) et un troisième palier à gaz (8) étant disposés concentriquement l'un par rapport à l'autre et un deuxième palier à gaz (2) situé au milieu entre le premier palier à gaz (9) et le troisième palier à gaz (2) étant décentré par rapport au premier palier à gaz et au troisième palier à gaz, **caractérisé en ce qu'**un dispositif de réglage (1) est prévu pour augmenter le décentrage du deuxième palier à gaz (2) lorsque la vitesse de rotation de l'arbre (3) augmente.

2. Système de palier à gaz selon la revendication 1, **caractérisé en ce que** le jeu radial (4) du deuxième palier à gaz (2) par rapport au boîtier (14) est au moins aussi grand que l'interstice radial de montage du palier à gaz (2) par rapport à l'arbre (3) qu'il reprend.

3. Système de palier à gaz selon la revendication 1 ou 2, **caractérisé en ce que** le deuxième palier à gaz (2) présente un jeu axial (7).

4. Système de palier à gaz selon l'une quelconque des revendications 1 à 3, **caractérisé en ce que** l'une des deux surfaces planes (31, 32) du deuxième palier à gaz (2) est en contact avec l'une des surfaces planes (33, 34) du premier palier à gaz (9) ou du troisième palier à gaz (8).

5. Système de palier à gaz selon l'une quelconque des revendications 1 à 4, **caractérisé en ce que** le dispositif de réglage (1) est conçu pour créer une force électrique, électromagnétique, hydraulique ou pneumatique de contrainte radiale F_{V}.

6. Système de palier à gaz selon l'une quelconque des revendications 1 à 5, **caractérisé en ce qu'**au moins un détecteur (10) de vitesse de rotation est prévu.

7. Système de palier à gaz selon la revendication 6, **caractérisé en ce que** le détecteur (10) de vitesse de rotation est conçu comme détecteur de Hall ou comme détecteur optique.

8. Système de palier à gaz selon l'une quelconque des revendications 1 à 7, **caractérisé en ce qu'**un aimant de levage ou une bobine mobile dépourvue de balais sont prévus pour créer la force de contrainte radiale du dispositif de réglage (1).

9. Système de palier à gaz selon l'une quelconque des revendications 1 à 8, **caractérisé en ce qu'**un amplificateur de force est agencé entre le deuxième palier à gaz (2) et le dispositif de réglage (1).

10. Système de palier à gaz selon la revendication 9, **caractérisé en ce que** l'amplificateur de force présente un levier (11) ou une transmission à roues dentées.

11. Système de palier à gaz selon l'une quelconque des revendications 1 à 10, **caractérisé en ce que** lorsque le tourbillon à demi-fréquence est établi, le rapport entre la force de contrainte radiale F_{V} du dispositif de réglage (1) et la rigidité radiale c du deuxième palier à gaz (2) est plus grand d'un facteur au maximum égal à 3,3 que lorsque le système de palier à gaz tourne à la vitesse de rotation de fonctionnement.

12. Système de palier à gaz selon l'une quelconque des revendications 1 à 11, **caractérisé en ce que** le jeu axial (5) du deuxième palier à gaz (2) est plus grand d'un facteur au moins égal à 1,15 que le produit de son coefficient α d'allongement longitudinal, de la largeur de montage B et de la différence de température Δt entre le deuxième palier à gaz (2) et le boîtier (5) à la vitesse de rotation de fonctionnement.

13. Système de palier à gaz selon l'une quelconque des revendications 1 à 12, **caractérisé en ce que** la force radiale F_{R} de frottement du deuxième palier à gaz (2) est au plus égale à 65 pour cent de la force de contrainte radiale maximale F_{Vmax} du dispositif de réglage (1) à la vitesse de rotation de fonctionnement.

14. Système de palier à gaz selon l'une quelconque des revendications 1 à 13, **caractérisé en ce que** lorsque le système de palier à gaz est au repos, le décentrage du deuxième palier à gaz (2) a une excentricité minimale de 10 pour cent de l'interstice radial de montage (6) du deuxième palier à gaz (2).

15. Système de palier à gaz selon l'une quelconque des revendications 1 à 14, **caractérisé en ce que** le dispositif de réglage (1) est conçu pour créer une force pneumatique de contrainte radiale F_{V}, une chambre de pression (12) qui est reliée à un interstice de montage (6, 7) par l'intermédiaire d'un alésage (13) étant prévue pour créer la force de contrainte radiale F_{V}.

16. Système de palier à gaz selon la revendication 15, **caractérisé en ce que** la chambre de pression (12) est agencée entre le deuxième palier à gaz (2) et le boîtier (5).

17. Système de palier à gaz selon la revendication 15 ou la revendication 16, **caractérisé en ce que** la chambre de pression (12) présente une étanchéité qui empêche les pertes de pression.

18. Système de palier à gaz selon la revendication 17, **caractérisé en ce que** l'étanchéité présente au moins un joint d'étanchéité (16, 17).

19. Système de palier à gaz selon la revendication 18, **caractérisé en ce que** le joint d'étanchéité (16, 17) est constitué de silicone.

20. Système de palier à gaz selon l'une quelconque des revendications 15 à 19, **caractérisé en ce que** l'angle de pourtour β de la chambre de pression (12) est d'environ 120 degrés.

21. Système de palier à gaz selon l'une quelconque des revendications 15 à 20, **caractérisé en ce que** l'angle β de la chambre de pression (12) est au maximum égal à environ 210 degrés.

22. Système de palier à gaz selon l'une quelconque des revendications 15 à 21, **caractérisé en ce qu'**en fonctionnement, la hauteur (18) de l'interstice de la chambre de pression (12) est au moins égale à 70 pour cent du jeu radial (4) du deuxième palier à gaz (2).

23. Système de palier à gaz selon les revendications 15 à 22, **caractérisé en ce que** le diamètre de la chambre de pression (12) est plus grand d'un facteur au moins égal à 1,7 que le diamètre du deuxième palier à gaz (2).

24. Système de palier à gaz selon les revendications 15 à 23, **caractérisé en ce que** la largeur de la chambre de pression (12) est au moins égale à 40 pour cent de la largeur de montage du deuxième palier à gaz (2).

25. Procédé pour faire fonctionner un système de palier à gaz d'un arbre à rotation rapide à une extrémité duquel est agencé un outil, en particulier procédé de montage sur paliers à gaz d'un arbre à rotation rapide à une extrémité duquel est agencé un miroir polygonal pour une broche optique, trois paliers à gaz agencés dans un boîtier étant prévus le long de l'arbre en vue de son montage radial, un premier palier à gaz et un troisième palier à gaz étant disposés concentriquement l'un par rapport à l'autre et un deuxième palier à gaz situé au milieu entre le premier palier à gaz et le troisième palier à gaz étant décentré par rapport au premier palier à gaz et au troisième palier à gaz, en particulier procédé pour faire fonctionner un système de palier à gaz d'un arbre à rotation rapide selon l'une quelconque des revendications 1 à 24, **caractérisé en ce qu'**un dispositif de réglage permet d'obtenir un décentrage du deuxième palier à gaz qui augmente à mesure que la vitesse de rotation de l'arbre augmente.

26. Procédé pour faire fonctionner un système de palier à gaz selon la revendication 25, **caractérisé en ce que** la force de contrainte radiale du dispositif de réglage augmente de façon au moins linéaire à mesure que la vitesse de rotation augmente.

27. Procédé pour faire fonctionner un système de palier à gaz selon la revendication 25 ou la revendication 26, **caractérisé en ce que** la force de contrainte radiale du dispositif de réglage est produite électriquement, électromagnétiquement, hydrauliquement ou pneumatiquement.

28. Procédé pour faire fonctionner un système de palier à gaz selon l'une quelconque des revendications 25 à 27, **caractérisé en ce que** le dispositif de réglage est actionné pneumatiquement, une alimentation en pression d'une chambre de pression du dispositif de réglage qui agit sur le deuxième palier à gaz s'effectuant à partir d'un interstice radial ou axial de montage et par l'intermédiaire d'un alésage.

29. Procédé pour faire fonctionner un système de palier à gaz selon la revendication 28, **caractérisé en ce que** la pression dans l'interstice radial ou axial de montage et exercée sur l'ouverture qui conduit à l'alésage augmente à mesure que la vitesse de rotation de l'arbre augmente et diminue à mesure que la vitesse de rotation diminue.
